# EUROPEAN PATENT SPECIFICATION

(11) **EP 4 096 393 B1**
(45) Date of publication and mention of the grant of the patent: **03.12.2025**
(21) Application number: 21706707.3
(22) Date of filing: 25.01.2021
(51) Int. Cl.: A01K 39/02

(54) **AUTOMATIC DRINKING TROUGH FOR BREEDING BIRDS**
AUTOMATISCHE TRÄNKE FÜR BRUTVÖGEL
ABREUVOIR AUTOMATIQUE POUR L'ÉLEVAGE D'OISEAUX

(30) Priority: 28.01.2020 IT 202000001624
(43) Date of publication of application: 07.12.2022
(73) Proprietor: Corti Zootecnici S.R.L., 21020 Monvalle (VA) (IT)
(72) Inventor: CORTI, Esterino, 21020 Monvalle (VA) (IT)
(74) Representative: Valentini, Giuliano
(86) International application number: PCT/IB2021/050534
(87) International publication number: WO 2021/152440

(56) References cited:
- EP-A1- 0 607 113
- DE-B1- 2 632 734
- US-A- 4 637 345
- US-A1- 2014 224 180

## Description

### Technical Field of the Invention

The present invention concerns an automatic drinking trough for breeding birds, such as for example chickens, ducks, geese, turkeys or the like.

### Prior Art

In a shed intended for breeding birds, generally drinking troughs connected at appropriate distances along a common water supply channel for providing the necessary water requirement to the birds present in the shed are prearranged.

Each drinking trough generally comprises a valve connected with the water supply channel and a valve drive element prearranged so that each animal can easily displace it from its rest position, i.e. from the position wherein the valve is closed, by pushing the same drive element with the beak or head. The water thus delivered is collected into a bowl placed under the valve and the drive element to allow the animal to quench its thirst; upon completing this operation, the animal moves away from the drive element and the latter returns to the rest position, thus closing the valve.

The most frequent problem to be addressed is that of ensuring access to the water and delivering the proper amount of water at any stage of growth of the animals, starting from the chick condition until adulthood.

In fact, the water requirement can considerably vary between the various stages of growth. For example, the weight of a turkey between the initial life stage and the adult growth stage can vary from about 50 grams to about 20 kg; consequently, it is necessary to provide for the delivery of a gradually increasing amount of water able to follow the body mass increase of the animal.

Several types of drinking troughs for birds, characterized by having a water delivery valve inserted by means of thread on rigid square PVC water pipes, are known in the art. In the particular case of the turkey, a relatively heavy and not very mobile animal, the delivery valve alone is not able to fully satisfy its drinking needs. It is thus necessary to apply both a bowl normally constrained to the same water supply pipe, and a lever system normally of the "pendulum" type, wherein the lever is operated by the animal itself and in turn transmits the movement to the delivery valve, thus properly opening it according to the proper requirement.

The Patent Application EP-A2-1308089 describes, for example, an automatic drinking trough according to the preamble of claim 1. The drinking trough described in this document comprises valve means controlled by a swinging drive element. The walls of the underlying collection bowl, which is integrally constrained to the supply channel, are shaped such as to delimit the swing range of the free end of the drive element.

The swinging movement of the drive element thus stays confined within a little angle and, consequently, the flow rate of water delivered can also vary within a rather narrow interval. This thus hinders to automatically achieve greater flow rates of water when the animals have reached a given stage of development.

EP 0607113 A1 discloses a drinking trough for breeding birds according to the preamble of claim 1. A sphere is interposed between the opposite end of the actuating element and the valve means housed in the body of the trough.

US 2014224180 A1 discloses a drinker equipped with a collecting bowl for the water and valve means connected to an oscillating actuating element. The valve means comprises a body which is movable in a vertical direction when the oscillating drive element is moved from the perpendicular position of closure of the valve means.

The terms "drive assembly" and "actuation assembly" are used herein interchangeably throughout the specification and claims.

Different solutions are suggested in order to adapt the amount of water delivered to the requirement of the animals in the various stages of growth, for example by replacing the bowl with a bigger one, by intervening on the valve to increase the flow rate of water and by possibly also removing the drive element so that the adult animal can directly operate the plug of the valve.

It is clear that all these solutions imply a considerable waste of time since all the drinking troughs present in a shed must be subjected to the same adjustment operations.

Moreover, with known systems of this type, for reasons of convenience, costs and to reduce the bulkiness of the system whenever the bowls are previously applied on the pipes, it would certainly be more convenient to send the PVC pipes with only the delivery valves already mounted thereon to the end customer and to send the conveniently packed bowls and pendulum-lever systems separately.

In any case, the coupling of the pendular lever systems and bowls to the pipes is always difficult, slow and imprecise. If such operations are then carried out directly in the breeding site for practical and economic reasons, such difficulties increase drastically.

The fact that the delivery valves are directly applied to the rigid PVC pipes by threading and that they are mounted with automatic machines should further be kept into account. However, the automatic machines do not anyway ensure sufficient precision tolerance as far as the protrusion of the valve from the pipe is concerned. In practice, more or less half a screwing turn is sufficient to have inadequate water levels with respect to the needs of the animal.

### Summary of the Invention

As a result, an object of the present invention is to suggest an automatic drinking trough for breeding birds which allows to increase the interval within which the flow rate of water delivered can vary.

A further object of the present invention is to propose an automatic drinking trough of the type mentioned above which can be used throughout the life cycle of the animals with simple and quick adjustment operations.

Further object of the present invention is to propose an automatic trough of the type mentioned above which is easy to assemble and install also by unskilled personnel.

These objects are reached by the present invention thanks to an automatic trough for breeding birds according to claim 1. Further peculiar characteristics of the present invention are set forth in the respective dependent claims.

An automatic drinking trough for breeding birds comprises valve means arranged along a water supply channel and at least one bowl for collecting the water delivered through the valve means. The latter have at least one stem sliding axially in a vertical direction to control the vertical axial movement of a plug for intercepting the flow of water. The drinking trough is further provided with a drive assembly which comprises a main body, a lever member housed in the main body and swinging with respect to the main body and a tubular actuator suspended at the center of the bowl and connected integrally with the lever member.

The drive assembly further comprises at least one movable piston placed between the stem and the lever member to move the plug between a position for intercepting and a position for delivering the flow of water depending on the inclination taken by the lever member.

The bowl is mounted integral with the water supply channel and comprises a central depression delimiting the swing range of the free end of the tubular actuator.

The movable piston loosen from the lever member allows to increase the extent of the lever arm up to about double with respect to the known systems, with the same swinging of the actuator member, thus increasing the axial range of the stem acting on the plug of the valve means of the same factor.

Moreover, the movable piston has a cylindrical body and a convex-shaped base portion, and the lever member has a head portion placed at one of its ends, with a concave-shaped seat on which the convex-shaped base portion of the movable piston rests.

The particular coupling with concave-convex geometry between the head portion of the lever member and the base portion of the cylinder exerts an effect of the "cam" type which further extends the vertical movement of the piston until reaching a multiplication factor of about four times with respect to known systems. The same effect can naturally also be achieved by inverting the coupling with concave-convex geometry between the base portion of the piston and the head portion of the lever member.

In a possible embodiment, the convex base portion of the movable piston and the concave seat of the head portion placed at the end of the lever member are truncated-cone shaped.

The solution suggested with the present invention thus allows to increase the opening of the valve, thus conferring more safety and immediacy to the availability and delivering of water.

By increasing the opening of the plug of the valve means, it is further possible to compensate any mounting tolerances of the valve means on the water supply pipes which could cause an insufficient delivery of water for the animals, thus further making the solution suggested appropriate also for application to slightly different models of drinking troughs.

In an embodiment, the drive assembly further comprises a cylindrical jacket in which the movable piston slides axially. The cylindrical jacket comprises a free edge at its lower end, whereas, at its upper end, the cylindrical jacket comprises at least one central hole through which the stem of the valve means passes.

The cylindrical jacket is preferably made of transparent plastic material. This allows the visual inspection of the contact space between the movable piston and the stem of the valve means. This arrangement can be useful not only for carrying out any adjustment of the drinking trough depending on the stage of growth of the animals, but also for adapting the same drive system of the valve means to other types of similar drinking troughs.

In fact, the main body of the drive assembly includes one or more windows which allow to visually check the proper position of the piston with respect to the stem.

Whenever adjustments must be carried out to compensate any exceeding of the mounting tolerances of the valve means or, as an alternative, to make the opening control of the valve means more or less sensitive, it is possible according to the invention to act on a sleeve screw-coupled to the main body of the drive assembly. The sleeve comprises at least one ring nut protruding from the main body of the drive assembly, so that to facilitate the manual rotating of the sleeve with respect to the main body.

The sleeve supports the lever member and tubular actuator suspended, with the possibility of swinging. In particular, the head portion of the lever member is resting against an inner portion of an upper end edge of the sleeve.

In the initial installation configuration, the sleeve is in a completely screwed condition, i.e. in the condition wherein an inner portion of the end edge of the sleeve abuts against the free lower edge of the cylindrical jacket. This allows to facilitate the mounting of the drinking trough also by unskilled personnel.

Whenever an adjustment is necessary, following the visual inspection through the windows present in the main body and the transparency of the jacket inside which the piston is housed, it is possible to act on the ring nut to bring the piston to the proper position.

### Brief Description of the Drawings

Further characteristics and advantages of the present invention will become clear from the following description, made with reference to the accompanying drawings by way of example and not limiting purpose, in which:
- Figure 1 is a perspective view of a possible embodiment of a drinking trough according to the present invention;
- Figure 2 is an elevation view of some components of a drive assembly for the drinking trough of Figure 1, with the lever member in the rest position, i.e. in the position wherein the valve means prevent the flow of water towards the bowl;
- Figure 3 is an elevation view similar to Figure 2, but with the drive assembly rotated by 90° and with the lever member in the operative position, i.e. in the position wherein the valve means enable the flow of water towards the bowl; and
- Figure 4 is a longitudinal section view according to the plane IV-IV of the drive assembly of Figure 2;
- Figure 5 is a longitudinal section view of the drive assembly of Figure 3.

### Detailed Description

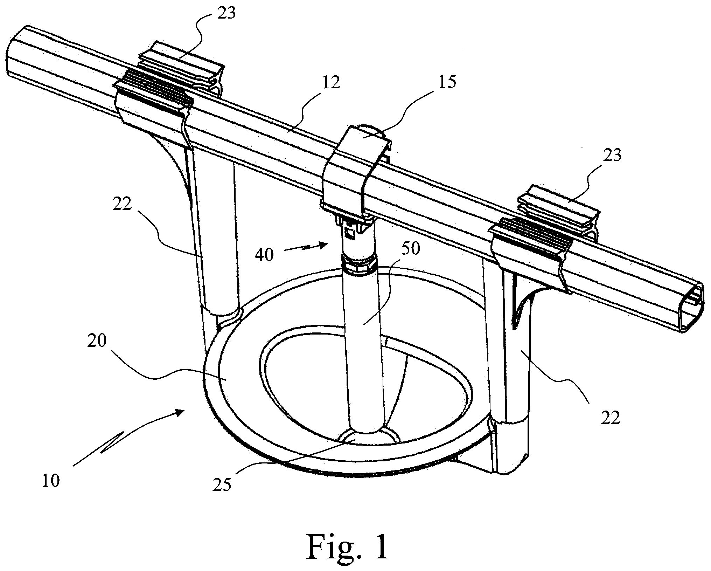

An automatic drinking trough 10 according to an embodiment of the invention, mainly intended, but not exclusively, for installation in a turkey farm, is depicted in Figure 1.

The drinking trough 10 is mounted suspended from a channel 12 for supplying water and generally comprises a bowl 20 inside which the water delivered is collected. The bowl 20 is mounted on the channel 12 by means of two arms 22 provided with respective releasable hooking means 23, in a position so that to be suspended with respect to the underlying ground at a height which allows the animals to access the water.

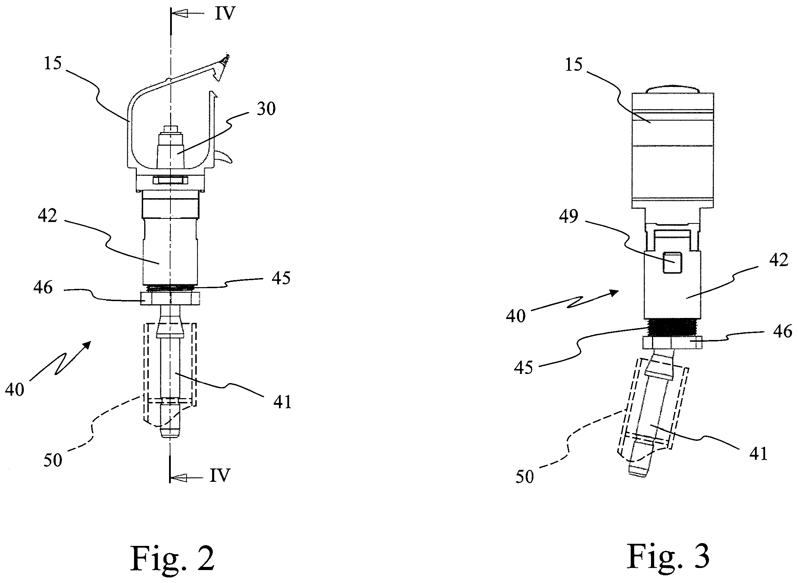

The bowl 20 comprises a central depression 25 above which a drive assembly 40 of valve means 30 (Figs. 2, 4 and 5) is mounted. The drive assembly 40 is also mounted on the channel 12 with a releasable hooking means 15 in a central position, so that the tubular actuator 50 of the drive assembly 40 is axially aligned with the axis of the bowl 20 passing through the center of the central depression 25. The swinging of the tubular actuator 50 is delimited by the walls of the central depression 25 against which the free end of the tubular actuator 50 stops.

Figures 2 and 3 are elevation views of some components of a drive assembly 40 for the drinking trough 10 of Figure 1. The tubular actuator 50 in both Figures 2 and 3 is only outlined with dotted lines to show the remaining components of the drive assembly 40 more clearly, in particular the lever member 41 on which the tubular actuator 50 is mounted integrally, so that both can swing together.

A main body 42, integral with the releasable hooking means 15, and a sleeve 45 coupled by screwing to the main body 42, are shown as a whole in the views of Figures 2 and 3 of the drive assembly 40. The sleeve 45 preferably includes a ring nut 46 protruding with respect to the main body 42 so that to facilitate the manual rotating of the sleeve 45 with respect to the main body 42. The rotating of the sleeve 45 allows to adjust the distance between the lower edge of the tubular actuator 50 and the bowl 20.

The lever member 42 in the view of Figure 2 is in rest position, i.e. in the position wherein the valve means 30 prevent the flow of water towards the bowl 20. The sleeve 45 is herein depicted in a completely screwed condition.

The view of Figure 3 depicts the drive assembly 40 rotated by 90° with respect to the view of Figure 2 and with the lever member 41 in operative position, i.e. in the position wherein the valve means 30 enable the flow of water towards the bowl 20. Windows 49, obtained in the main body 42 for allowing the visual inspection of the components present inside the main body 42, are moreover visible in the view of Figure 3.

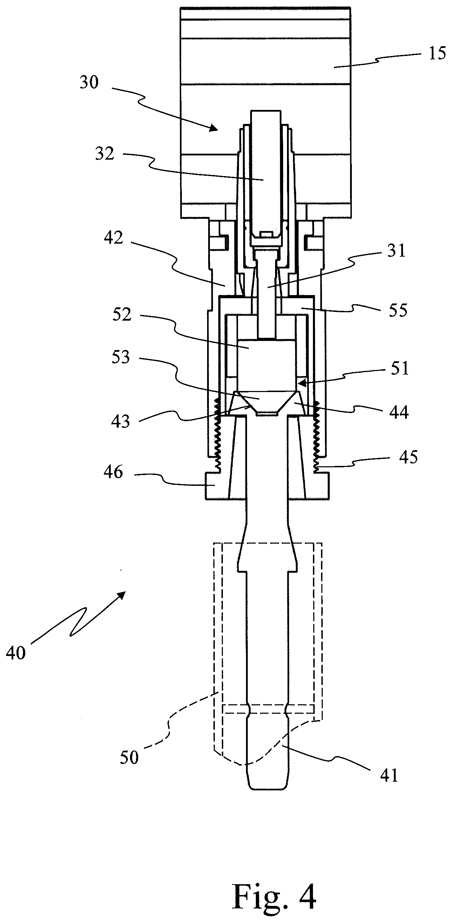

As depicted in the section view of Figure 4, the valve means 30 comprise a stem 31 against which the cylindrical plug 32 is resting, both being slidable along an axial direction. There is a limited clearance between the stem 31 and the plug 32 in this rest condition; thus, the stem 31 does not exert thrusts on the plug 32 and the flow of water towards the bowl 20 is thus prevented.

A movable piston 51 is placed between the stem 31 of the valve means 30 and the lever member 41. The movable piston has a cylindrical body 52 and a convex-shaped base portion 53, whereas the lever member 41 has a head portion 44 with a concave-shaped seat 43 on which the convex-shaped base portion 53 of the movable piston rests. The convex base portion 53 of the movable piston 51 and the concave seat 43 of the head portion 44 placed at the end of the lever member 41 can be truncated-cone shaped, for example.

The movable piston 51 is housed in a cylindrical jacket 55 and is slidable axially therein. The cylindrical jacket 55 is preferably made of transparent plastic material to allow the visual inspection of the positions of the piston 51 and stem 31.

The lever member 41 and the tubular actuator 50 integral therewith are supported suspended, with the possibility of swinging, by the sleeve 45 coupled by screwing to the main body 42 of the drive assembly. The head portion 44 of the lever member 41 is resting against an inner portion of an end edge of the sleeve 45. The sleeve 45 is depicted in a completely screwed condition in the view of Figure 4, i.e. in the condition wherein an inner portion of the end edge of the sleeve 45 abuts against the free lower edge of the cylindrical jacket 55.

The height of the transparent cylindrical jacket 55 depends on the type of valve means 30 of the drinking trough and it is mounted with tight tolerances when mounted during production for a particular type of drinking trough. Vice-versa, whenever the valve means 30 are mounted separately in the drinking trough, any positioning excess outside the allowed tolerances is absorbed by the flexibility of the position of the sleeve 45 which is mounted in abutment against the free lower edge of the cylindrical jacket 55.

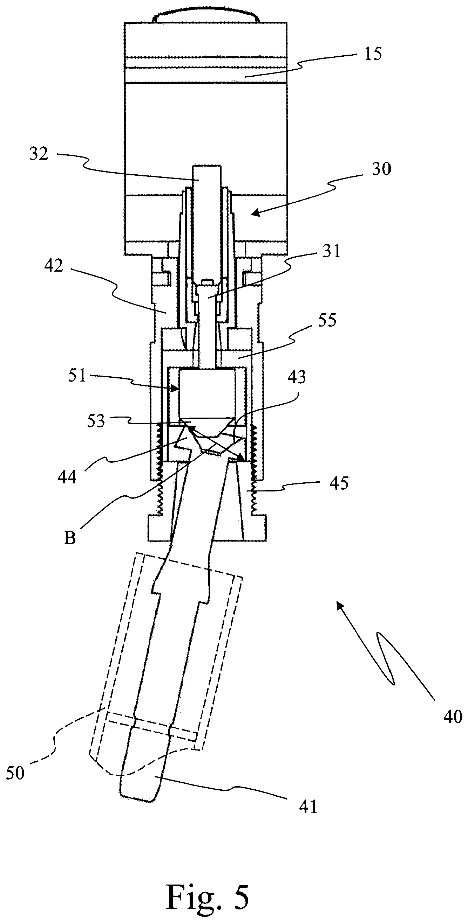

The drive assembly of Figure 3 is depicted in the view of Figure 5 according to a longitudinal section view in order to highlight the positions taken by the various components when the tubular actuator 50 is pushed by an animal to make the water run down in the bowl 20. The sleeve 45 is moreover featured in the view of Figure 5 in a lowered position of adjustment with respect to that of Figure 4.

The lever member 41 to which the tubular actuator 50 is constrained is displaced with respect to the position of Figure 4. The interaction between the concave seat 43 of the head portion 44 and the convex base portion 53 of the movable piston 51 raises the piston 51 with an arm lever B which is much greater with respect to the drive systems of the known drinking troughs. The movable piston 51 thus pushes the stem 31 with a higher range and consequently opens the plug 32 more with respect to the know systems, so that to increase the flow rate of water towards the bowl 20.

Various modifications can be made to the embodiments depicted herein without thereby departing from the scope of the invention as defined by following claims.

For example, the intercepting plug of the valve means can be truncated-cone shaped with the short base resting against the stem, so that the raising of the plug further increases the passage port of the water with respect to a plug of cylindrical shape. This allows to reduce the pressure drop which occurs in the flow-narrowing area placed between the plug and stem and to increase the flow rate of water.

## Claims

1. An automatic drinking trough (10) for breeding birds, comprising valve means (30) arranged along a water supply channel (12) and at least one bowl (20) for collecting the water delivered through said valve means (30), wherein said valve means (30) have at least one stem (31) sliding axially in a vertical direction to control the axial vertical movement of a plug (32) for intercepting the flow of water, an actuation assembly (40) comprising a main body (42), a lever member (41) housed in said main body (42) and swinging with respect to said main body (42) and a tubular actuator (50) suspended at the center of said bowl (20) and connected integrally with said lever member (41), wherein said actuation assembly (40) further comprises at least one movable piston (51) placed between said stem (31) and said lever member (41) to move said plug (32) between a position for intercepting and a position for delivering the flow of water depending on the inclination taken by said lever member (41), and wherein said lever member (41) and said tubular actuator (50) are supported suspended, with the possibility of swinging, by a sleeve (45) coupled with the main body (42) of said actuation assembly (40), wherein a head portion (44) of said lever member (41) is resting against an inner portion of an upper end edge of said sleeve (45), **characterised in that** the sleeve (45) is coupled by screwing with the main body (42) of said actuation assembly (40), and **in that** at a lower end said sleeve (45) comprises at least one ring nut (46) protruding from the main body (42) of said actuation assembly (40), so that to facilitate the manual rotating of said sleeve (45) with respect to said main body (42).

2. The drinking trough (10) according to claim 1, wherein said movable piston (51) has a cylindrical body and a convex-shaped base portion (53), and wherein said lever member (41) has said head portion (44) placed at one of its ends, with a concave-shaped seat (43) on which the convex-shaped base portion (53) of said movable piston (51) rests.

3. The drinking trough (10) according to claim 2, wherein the convex base portion (53) of said movable piston (51) and the concave seat (43) of the head portion (44) placed at the end of the lever member (41) are truncated-cone shaped.

4. The drinking trough (10) according to claim 1, wherein said actuation assembly (40) further comprises a cylindrical jacket (55) in which said movable piston (51) slides axially, wherein said cylindrical jacket (55) comprises a free lower edge.

5. The drinking trough (10) according to claim 4, wherein said cylindrical jacket (55) is made of transparent plastic material.

6. The drinking trough (10) according to claim 1, wherein the main body (42) of said actuation assembly (40) comprises one or more windows (49) for the visual inspection of the contact space between said movable piston (51) and said stem (31).

7. The drinking trough (10) according to claim 4, wherein the inner portion of the upper end edge of said sleeve (45), in completely screwed conditions, abuts against the free lower end of said cylindrical jacket (55).

8. The drinking trough (10) according to claim 1, wherein said bowl (20) is mounted integral with said water supply channel (12) and comprises a central depression (25) delimiting the swing range of the free end of said tubular actuator (50).

## Patentansprüche

1. Eine automatische Tränke (10) für Brutvögel, umfassend ein Ventilmittel (30), das entlang eines Wasserzufuhrkanals (12) angeordnet ist, und mindestens eine Schale (20) zum Auffangen des durch das Ventilmittel (30) abgegebenen Wassers, wobei das Ventilmittel (30) mindestens einen Schaft (31) umfasst, der sich axial in vertikaler Richtung verschiebt, um die axiale vertikale Bewegung eines Verschlusskörpers (32) zur Unterbrechung des Wasserflusses zu steuern, eine Betätigungseinheit (40), die ein Gehäuse (42), ein Hebelelement (41), das im Gehäuse (42) gelagert und relativ zu dem Hebelelement (41) schwenkbar ist, und einen rohrförmigen Betätiger (50), der zentral in der Schale (20) aufgehängt und fest mit dem Hebelelement (41) verbunden ist, umfasst, wobei die Betätigungseinheit (40) weiter mindestens einen beweglichen Kolben (51) umfasst, der zwischen dem Schaft (31) und dem Hebelelement (41) angeordnet ist, um den Verschlusskörper (32) je nach Neigung des Hebelelements (41) zwischen einer Durchflussunterbrechungsposition und einer Wasserfreigabeposition zu bewegen, und wobei das Hebelelement (41) und der rohrförmige Betätiger (50) aufgehängt und schwenkbar durch eine Hülse (45) getragen sind, die mit dem Gehäuse (42) der Betätigungseinheit (40) verbunden ist, wobei ein Kopfabschnitt (44) des Hebelelements (41) gegen einen inneren Abschnitt eines oberen Endrands der Hülse (45) anliegt, **dadurch gekennzeichnet, dass** die Hülse (45) durch Verschrauben mit dem Gehäuse (42) der Betätigungseinheit (40) verbunden ist, und dass die Hülse (45) an ihrem unteren Ende mindestens eine Ringmutter (46) aufweist, die aus dem Gehäuse (42) der Betätigungseinheit (40) hervorsteht, um das manuelle Drehen der Hülse (45) relativ zum Gehäuse (42) zu erleichtern.

2. Die Tränke (10) nach Anspruch 1, wobei der bewegliche Kolben (51) einen zylindrischen Körper und einen konvex geformten Bodenabschnitt (53) hat, und wobei das Hebelelement (41) an einem seiner Enden den Kopfabschnitt (44) aufweist, mit einer konkav geformten Auflagefläche (43), auf welcher der konvex geformte Bodenabschnitt (53) des beweglichen Kolbens (51) aufliegt.

3. Die Tränke (10) nach Anspruch 2, wobei der konvexe Bodenabschnitt (53) des beweglichen Kolbens (51) und die konkave Auflagefläche (43) des am Ende des Hebelelements (41) angeordneten Kopfabschnitts (44) kegelstumpfförmig ausgebildet sind.

4. Die Tränke (10) nach Anspruch 1, wobei die Betätigungseinheit (40) weiter einen zylindrischen Mantel (55) umfasst, in dem der bewegliche Kolben (51) axial verschiebbar ist, wobei der zylindrische Mantel (55) einen freien unteren Rand umfasst.

5. Die Tränke (10) nach Anspruch 4, wobei der zylindrische Mantel (55) aus einem transparenten Kunststoffmaterial besteht.

6. Die Tränke (10) nach Anspruch 1, wobei das Gehäuse (42) der Betätigungseinheit (40) eine oder mehrere Öffnungen (49) umfasst, die eine Sichtprüfung des Kontaktraums zwischen dem beweglichen Kolben (51) und dem Schaft (31) ermöglichen.

7. Die Tränke (10) nach Anspruch 4, wobei der innere Abschnitt des oberen Endrands der Hülse (45) in vollständig eingeschraubtem Zustand an dem freien unteren Ende der zylindrischen Hülse (55) anliegt.

8. Die Tränke (10) nach Anspruch 1, wobei die Schale (20) integral mit dem Wasserzufuhrkanal (12) verbunden ist und eine zentrale Vertiefung (25) umfasst, welche den Schwenkbereich des freien Endes des rohrförmigen Betätigers (50) begrenzt.

## Revendications

1. Abreuvoir automatique (10) pour l'élevage d'oiseaux, comprenant des moyens de soupape (30) disposés le long d'un canal d'alimentation en eau (12) et au moins un bol (20) pour collecter l'eau délivrée par lesdits moyens de soupape (30), dans lequel lesdits moyens de soupape (30) ont au moins une tige (31) coulissant axialement dans une direction verticale pour contrôler le mouvement vertical axial d'un bouchon (32) pour intercepter l'écoulement d'eau, un ensemble d'actionnement (40) comprenant un corps principal (42), un élément de levier (41) logé dans ledit corps principal (42) et pivotant par rapport audit corps principal (42) et un actionneur tubulaire (50) suspendu au centre dudit bol (20) et relié en un seul tenant avec ledit élément de levier (41), dans lequel ledit ensemble d'actionnement (40) comprend en outre au moins un piston mobile (51) placé entre ladite tige (31) et ledit élément de levier (41) pour déplacer ledit bouchon (32) entre une position d'interception et une position de distribution de l'écoulement d'eau en fonction de l'inclinaison prise par ledit élément de levier (41), et dans lequel ledit élément de levier (41) et ledit actionneur tubulaire (50) sont supportés suspendus, avec la possibilité de basculer, par un manchon (45) couplé au corps principal (42) dudit ensemble d'actionnement (40), dans lequel une partie de tête (44) dudit élément de levier (41) repose contre une partie intérieure d'un bord d'extrémité supérieur dudit manchon (45), **caractérisé en ce que** le manchon (45) est couplé par vissage au corps principal (42) dudit ensemble d'actionnement (40), et **en ce qu'**à une extrémité inférieure, ledit manchon (45) comprend au moins un écrou à anneau (46) faisant saillie à partir du corps principal (42) dudit ensemble d'actionnement (40), afin de faciliter la rotation manuelle dudit manchon (45) par rapport audit corps principal (42).

2. Abreuvoir (10) selon la revendication 1, dans lequel ledit piston mobile (51) a un corps cylindrique et une partie de base (53) de forme convexe, et dans lequel ledit élément de levier (41) a ladite partie de tête (44) placée à l'une de ses extrémités, avec un siège (43) de forme concave sur lequel repose la partie de base (53) de forme convexe dudit piston mobile (51).

3. Abreuvoir (10) selon la revendication 2, dans lequel la partie de base convexe (53) dudit piston mobile (51) et le siège concave (43) de la partie de tête (44) placée à l'extrémité de l'élément de levier (41) sont de forme tronconique.

4. Abreuvoir (10) selon la revendication 1, dans lequel l'ensemble d'actionnement (40) comprend en outre une enveloppe cylindrique (55) dans laquelle le piston mobile (51) coulisse axialement, dans lequel ladite enveloppe cylindrique (55) comprend un bord inférieur libre.

5. Abreuvoir (10) selon la revendication 4, dans lequel ladite enveloppe cylindrique (55) est fabriquée en matière plastique transparente.

6. Abreuvoir (10) selon la revendication 1, dans lequel le corps principal (42) de l'ensemble d'actionnement (40) comprend une ou plusieurs fenêtres (49) pour l'inspection visuelle de l'espace de contact entre le piston mobile (51) et la tige (31).

7. Abreuvoir (10) selon la revendication 4, dans lequel la partie intérieure du bord d'extrémité supérieur dudit manchon (45), dans des conditions complètement vissées, vient en butée contre l'extrémité inférieure libre de ladite enveloppe cylindrique (55).

8. Abreuvoir (10) selon la revendication 1, dans lequel ledit bol (20) est montée d'un seul tenant avec ledit canal d'alimentation en eau (12) et comprend une dépression centrale (25) délimitant la plage de pivotement de l'extrémité libre dudit actionneur tubulaire (50).
